# EUROPEAN PATENT APPLICATION

(11) **EP 4 289 736 A1**
(43) Date of publication of application: **13.12.2023**
(21) Application number: 23177791.3
(22) Date of filing: 06.06.2023
(51) Int. Cl.: B64D 11/00, B64D 13/06

(54) **METHOD FOR DUCTING A MICRO-CHILLER INTO A CART BAY OR OTHER ENCLOSURE FOR OPTIMAL AIR CIRCULATION**

(30) Priority: 08.06.2022 US 202263350352 P; 24.01.2023 US 202318100906
(71) Applicant: B/E Aerospace, Inc., Winston-Salem, NC 27105 (US)
(72) Inventor: PEARSON, Matthew R., East Hartford, 06118 (US); WEICHSELBAUM, Noah Avram Meltz, Prairie Village, KS 66208 (US); ST. ROCK, Brian, Andover, 06232 (US)
(74) Representative: Dehns

(57) **Abstract**

An assembly, system, and method for managing airflow in a galley cart bay is provided. The assembly includes a cart bay (205); a plate assembly (225) including a plurality of plates (215, 220, 225) that are configured at a rear part of the cart bay; and a micro-chiller unit (230) that is disposed within the plate assembly that radially expels cooled air for circulation in the cart bay wherein the cooled air is directed by at least one plate of the plate assembly across one or more exterior surfaces of a galley cart stowed in the cart bay.

## Description

### CROSS-REFERENCE TO RELATED APPLICATIONS

This application claims benefit of priority to U.S. Provisional Application Ser. No. 63/350,352 entitled "HIGH EFFICIENCY MICRO-CHILLER UNIT", filed on June 8, 2022.

### FIELD

The present disclosure generally relates to cooling enclosures within an aircraft, and more specifically to an assembly, a system, and a method of manufacture of a plate assembly for directing cooled air circulation within a galley cart bay from a micro-chiller unit to cool exterior sides of a galley cart stowed therein.

### BACKGROUND

Premium class passengers that include first class and business are generally considered the most profitable passenger segment for carriers, and therefore carriers' desire to provide the premium class passengers with the high comfort and service. This includes extending the class of service to not only commonly considered options such as passenger seating and space, but also to other services provided including providing chilled refreshments in a mini bar in the aircraft galley or in service from a galley cart. Currently, it has not been feasible to station compact refrigerator-type compartments in a galley monument or other such smaller enclosures and for use in cooling service carts onboard the aircraft.

### SUMMARY

In an embodiment, an assembly for a galley cart bay is provided. The assembly includes a cart bay; a plate assembly comprising a plurality of plates that are configured at a rear part of the cart bay; and a micro-chiller unit that is disposed within the plate assembly that radially expels cooled air for circulation in the cart bay wherein the cooled air is directed by at least one plate of the plurality of plates of the plate assembly across an exterior surface of a galley cart stowed in the cart bay.

In various embodiments, the cooled air is circulated by the at least one plate of the plurality of plates across a set of interior sides of the cart bay.

In various embodiments, the cooled air is circulated by the at least one plate of the plate assembly in a forward direction across the exterior surface of a first side of the galley cart stowed in the cart bay and then in a reverse direction across the exterior surface of a second side that is opposite to the first side of the galley cart stowed in the cart bay.

In various embodiments, the cooled air is circulated by the at least one plate of the plate assembly in the forward direction across the exterior surface of a bottom side of the galley cart stowed in the cart bay and then in the reverse direction across the exterior surface of a top side that is opposite to the bottom side of the galley cart stowed in the cart bay.

In various embodiments, the assembly further includes a spacing between interior surfaces of the cart bay and sides of the galley cart stowed in the cart bay to circulate the cooled air by the at least one plate of the plate assembly across a respective side surface of the galley cart.

In various embodiments, at least one plate of the plate assembly is configured to protect the micro-chiller unit from impact caused by motion of the galley cart stowed in the cart bay.

In various embodiments, the assembly further includes a plurality of micro-chiller units mounted on a rear plate of the plate assembly disposed of in the cart bay to circulate the cooled air across at least one side of the galley cart stowed in the cart bay wherein each micro-chiller unit is positioned to expel the cooled air in separate channels across at least one exterior surface of the galley cart stowed in the cart bay.

In various embodiments, the plate assembly is configured to consume an amount space in the cart bay to still enable a storage of the galley cart of a size that is in use to be stowed in the cart bay.

In various embodiments, the assembly includes a divider configured between an adjacent pair of cart bays that enables isolation of the cooled air that is circulated within each cart bay.

In various embodiments, the micro-chiller unit is mounted on the rear plate of the plate assembly; and at least one plate of the plate assembly is configured with an intake opening to ingest air circulated across the one or more exterior surfaces of the galley cart for direction towards the micro-chiller unit, and an outtake opening to circulate air that has been radially expelled by the micro-chiller unit across the one or more exterior surfaces of the galley cart to cool the galley cart.

In various embodiments, the intake opening and the outtake opening configured in the at least one plate of the plate assembly provides a back-and-forth operation to uniformly re-circulate the cooled air across the one or more exterior surfaces of the galley cart stowed in the cart bay.

In various embodiments, the plate assembly further includes a first plate that is configured with the intake opening of a circular shape to taper airflow that has been circulated around the cart bay towards the micro-chiller unit, and the outtake opening of a rectangular-shape to spread airflow of the cooled air from the micro-chiller unit around the cart bay.

In various embodiments, a system for directing airflow within a galley cart bay is provided. The system includes a plate assembly disposed in the galley cart bay including a plurality of plates assembled together at a rear part of the galley cart bay; and a micro-chiller unit mounted to a plate of the plurality of plates of the plate assembly that sends cooled air from the rear of the galley cart bay through the plurality of plates wherein the plurality of plates comprises one or more plates that are assembled and configured to spread the airflow of the cooled air across outward portions of the galley cart bay to cool exterior surfaces of a galley cart that is stowed within the galley cart bay.

In various embodiments, the cooled air is bi-directionally circulated by the one or more plates around the galley cart bay.

In various embodiments, the cooled air is bi-directionally circulated via spacing that exists between the galley cart bay and a stowed galley cart in the galley cart bay.

In various embodiments, the plurality of plates provides a protective structure to the micro-chiller unit against impacts caused when storing of the galley cart in the galley cart bay.

In various embodiments, the plurality of plates include at least one plate that is configured with a set of openings of a different size and shape for directing and receiving the airflow of the cooled air in the galley cart bay.

In various embodiments, a method to manufacture of a plurality of plates in a galley cart bay is provided. The method includes assembling the plurality of plates to form a plate assembly which is modeled to conform with a rear part of the galley cart bay; and mounting a micro-chiller unit to a rear plate of the plate assembly that generates a cool air flow that is patterned by openings configured in the plurality of plates of the plate assembly to circulate cool air around exterior portions of the galley cart bay wherein circulated cool air chills exterior surfaces of a galley cart stowed in the galley cart bay.

In various embodiments, the plate assembly accounts for about half an inch of distance within the galley cart bay to enable an already in use galley cart for storing in the galley cart bay.

In various embodiments, the plurality of plates is composed of a set of material including at least a lightweight metal alloy, a fiberglass material, a phenolic honeycomb material, and a plastic material.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates a galley configuration that includes a plurality of sub-units of cart bays that are configured in the galley unit, in accordance with various embodiments.
FIGS. 2A, 2B, 2C, 2D and 2E illustrate various perspectives of the plate assembly with the micro-chiller unit in accordance with various embodiments.
FIG. 3 illustrates a diagram of adjacent cart bays with a divider to separate/isolate airflow between each cart bay in accordance with various embodiments.
FIG. 4 illustrates a flow diagram for configuring a plate assembly in a cart bay in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

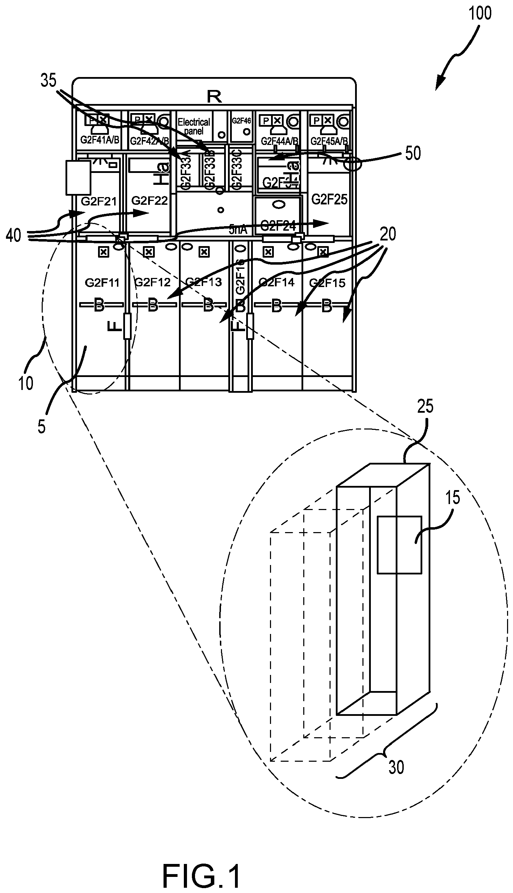

With reference to FIG. 1, FIG. 1 illustrates a galley configuration that includes a plurality of sub-units 10 that can include cart bays 20 that are configured in the galley unit 100, in accordance with various embodiments. When a cart 5 is stowed in the galley unit 100, the cart 5 (and food contents contained therein) should be maintained with a storage temperature of about 4° C/39.2° F. In various embodiments, the cart bay 20 may be chilled to approximately this temperature by cooled air that is generated or expelled by a micro-chiller unit 15 configured inside the cart bay 20 and by the resultant cooled air airflow distributed throughout the cart bay 20 by the micro-chiller unit 15. The micro-chiller unit 15 configured to perform this chilling operation can be mounted on a rear wall 25 of the cart bay 20 (or disposed in plate assembly 30) and a cart 5 can be stowed within the cart bay 20. In various embodiments, the plate assembly 30 can be configured to conform to a rear part of the cart bay 20 with room for the cart 5 (legacy or current sized cart in use) to be stored.

In various embodiments, for enhanced food service operations in-flight, having an increased number of carts 5 with a corresponding number of additional cart bays 20 available that can be provided with cooling capabilities to maintain the appropriate food storage temperature using one or more micro-chiller units 15 in each cart bay 20 can allow for the storage of more perishable food and may, for example, allow for extended passenger food services to be made available on long haul flights (e.g., more hot meal services).

In various embodiments, the galley unit (structure) 100 illustrated in FIG. 1 can include multiple cart bays 20 or can be configured with as single cart bay 20 (as desired) to include a single chilled trolley or cart 5. In various embodiments, a chilled cart bay 20 can be configured with a single sided micro-chiller unit 15 that is attached to a rear wall of the cart bay 20 or with multiple single sided micro-chiller units 15 in the cart bay 20 to distribute cooled air around (across the sides of the cart 5) the interior of the cart bay 20 interior. In various embodiments, the cooled airflow can be configured to be spread across the left and right sides of the cart 5 or around the top and bottom sides of the cart 5.

In various embodiments, a double-sided micro-chiller unit (e.g., a dual sided unit configured with a fan/heatsink on the backside of the cooling plate, and the fan/heatsink also configured on the front side of the cooling plate) may also be configured in a cart bay 20 where the fan and heatsink of a micro-chiller unit is attached to both to the inside of an exterior rear wall of the cart bay 20 and also disposed of outside the exterior wall (inside the interior wall of a housing) of the cart bay 20 or within a plate assembly 30 that is configured in the rear part of the cart bay 20.

In various embodiments, the micro-chiller is a unit provides cooling internal to the cart and cart bay 20, and rejects heat into a rear exterior space behind the unit. The heat rejected side (exterior to the cart bay 20) is a configuration of elements comprising a combination of the fan and the heat sink. On the cold side (inside the cart bay 20), there is configured a fan and heat sink (e.g., the single-sided micro-chiller unit configuration primarily described herein in which the circulation of airflow is kept within the cart bay 20 by the fan attached to the cold side of a chilled surface).

In various embodiments, the cart bay 20 can be configured as a non-chilled bay with single sided micro-chiller unit disposed of in the cart 5 itself. In various embodiments, the galley unit 100 may include other components modeled that include a beverage maker 35, oven 40, and water heater 50. In various embodiments, the oven 40 and water heater 50 may be configured with a reverse polarity applied to thermo-couple elements of a micro-chiller unit 15 disposed therein to enable warming or heating operations for the appliance itself or for an individual sub-unit 10 in which the appliance is stored.

In various embodiments, the galley unit 100 can be deployed outside an aircraft galley area with a different configuration or number of stacked together or spaced apart sub-units 10. In various implementations, a pair of sub-units 10 (i.e., a set of single lower set of sub-units 10) can be configured in a module to support a small counter, or a set of lower/upper sub-units with different depths paired together with siloed chilling capabilities and a counter in between for counter workspace may also be configured.

In various embodiments, because each chilled cart bay 20 is an individual (siloed, isolated) sub-unit 10 that can be cooled without a central heat exchanger for distribution of the cooled air in multiple cart bays, a more customized compact set of cart bays 20 can be positioned outside of a galley location and within interior passenger seating locations or modules of the aircraft. This can enable flexibility in configuring multiple less centralized food stations throughout the interior of the aircraft.

In various embodiments, different modular configurations of galley type units with cart bays or with chilled compartments can be positioned within interior aircraft locations that can enable access for passengers to food items stored remotely from a centralized galley facility in an aircraft. This can provide or make available social congregation space for passengers alongside cooled refreshments and condiments in more interior locations of the aircraft. Also, distributed compact smaller self-contained chilled cart bays 20 with their own micro-chiller units 15 can allow passengers to independently service themselves with food items while limiting direct contact (i.e., for social distancing) between passengers and crew and also reducing the number of crew ordinarily employed to serve refreshments and food items in flight thereby saving the carrier operating costs.

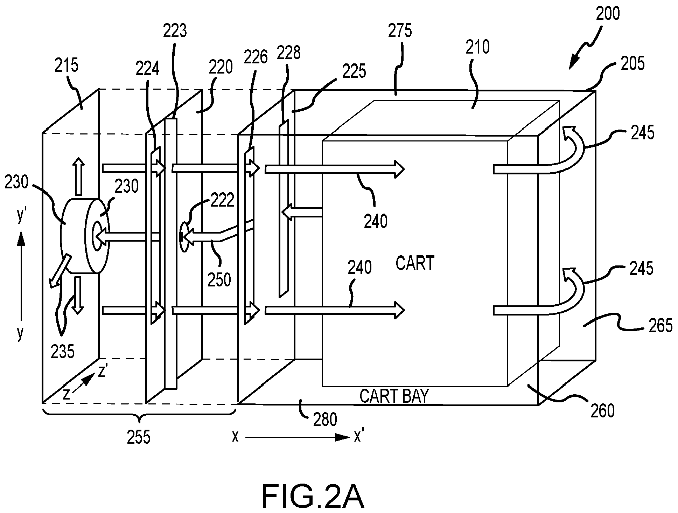

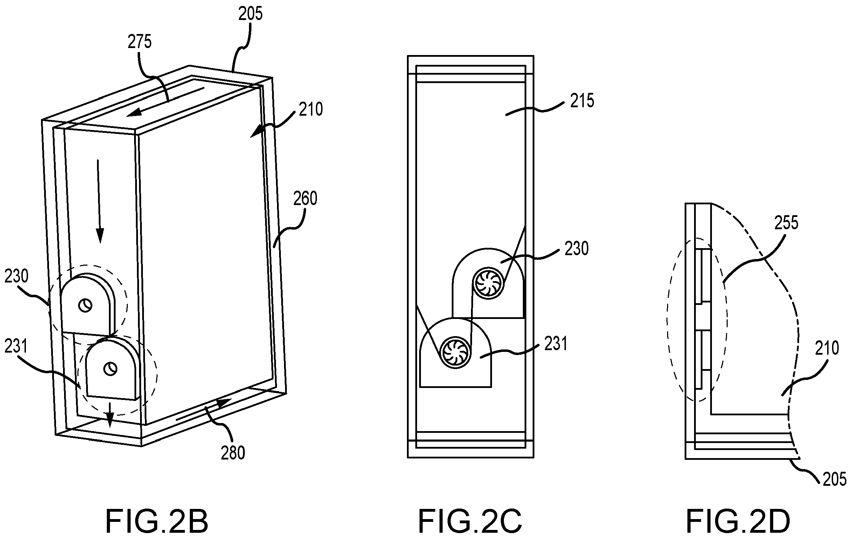

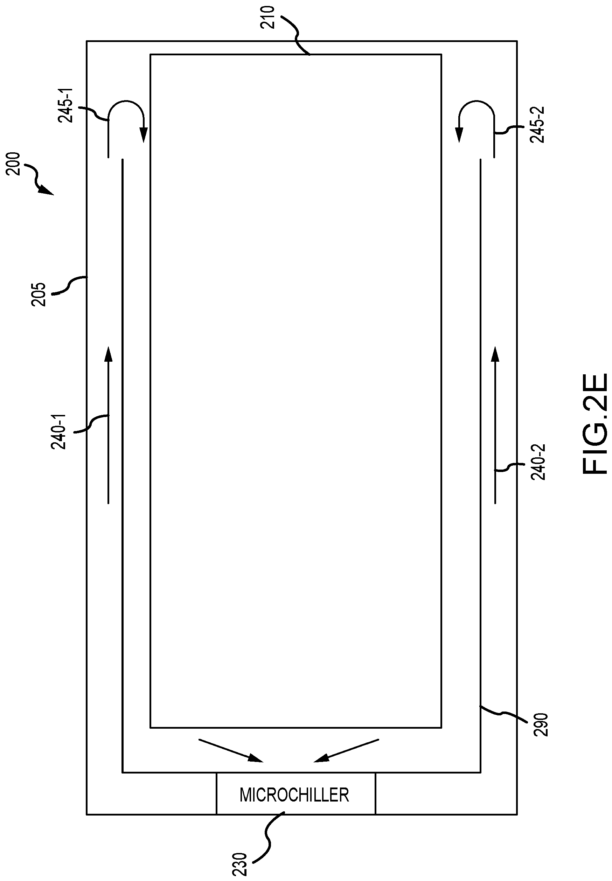

FIGS. 2A, 2B, 2C, 2D, and 2E illustrate various perspectives of the plate assembly with the micro-chiller unit in accordance with various embodiments. In FIG. 2A-E, there is a shown a galley cart assembly 200 includes a cart 210, a cart bay 205, a micro-chiller unit 230, a set of plates (215, 220, 225) that comprise a plate assembly 255 and include a first (rear) plate 215, a second (an intermediate) plate 220, and a third (end) plate 225 that form the plate assembly 255. In various embodiments, the plate assembly 255 includes a set of plates composed of metallic materials (such as lightweight sheet metal, aluminum, or other alloys), honeycomb composed materials, fiber boards or related products or combinations thereof. In various embodiments, the plate assembly 255 is located in the rear of the cart bay 205 and positioned in a manner so the cart 210 when stored in the cart bay 205 lines up or is positioned against the third (front, end) plate 225 of the plate assembly 255. That is, when a flight crew or other personnel stows the cart 210 in the cart bay 205, the rear of the cart 210 as it is rolled into the cart bay 205 may impact the plate 225 (that makes up the exterior covering of the plate assembly 255) which acts as a rear wall of the cart bay 205. In various embodiments, the plate assembly 255 is a rigid structure of a set/series of plates that forms rear parts (i.e., the rear wall and the back wall of the cart bay wall) of the cart bay 205. Hence, each plate (215, 220, 225) is configured with a height and width that conforms to the height and width of the interior of the cart bay 205. In various embodiments, the rear plate 215 of the plate assembly 255 may be configured as the rear side of the cart bay 205. Hence, the series of plates (215, 220, 225) can make up a rear section of the cart bay 205 or can be inserted and fitted in the rear of the cart bay 205. The depth of this rear section of plate assembly 255 is approximately half an inch (1.27 cm) or less. Hence, the plate assembly 255 is configured to take no more distance and space represented by a minimum encroachment in the cart interior of about.5 inches (1.27cm).

In various embodiments, the plate assembly 255 may be configured as an insertable module that can be inserted in, as an example, a legacy or currently in use cart bay 205. In various embodiments, the cross-sectional area of each plate is both slightly wider and of a greater height than the cart 210 to conform with the cart bay 205 and therefore outside edge portions of each plate are outside the width of the cart 210 when the cart 210 sits in the cart bay 205. This allows for openings configured one or more plates to direct cooled air around the cart 210.

In various embodiments, the micro-chiller unit 230 is attached or mounted to the plate 215 of the plate assembly 255. In various embodiments, the plate 215 which is the rear plate of the plate assembly 255 may also serve as a rear side of the cart bay 205. In various embodiments, the micro-chiller unit 230 may be mounted to a rear side of the cart bay 205. In this instance, the plate assembly 255 would be composed of a set of two plates (i.e., plate 220 and plate 225). The micro-chiller unit 230 is mounted or attached to a center location of the rear plate 215 and expels (generates) cool air radially to channel an airflow 240 across an exterior surface of the cart 210 through a set of apertures or slits configured in the plate assembly 255.

In various embodiments, the plates 220, 225 of the plate assembly 255 directs the air flow (i.e., cooled air expelled radially 235 in a forward direction) around the sides of the cart 210 through a series of longitudinal openings that spread the airflow (uniformly) across the surface of the sides of the cart 210 in a forward direction from the rear of the cart 210 when it is stowed in the cart bay 205, around the cart 210, and to its opposite side. The airflow is channeled or passed through the longitudinal (rectangular slit shaped) opening 224 (outtake airflow) which is a lengthwise and narrowly configured opening stretching a majority of the length of the plate 220 (in this case, on the right side of the plate 220) that spreads the airflow laterally over the face of a side of the cart 210 and is further directed using a divider 223 protruding from the plate 220. The airflow is then directed to another plate 225 that is configured with a similar shaped longitudinal opening 226 in the plate 225 that spreads the cooled air across a face or surface of the cart 210 on its right side 260 (X-X', Y-Y') for cooling the cart's right side 260 surface area. The airflow 240 that is being spread across each side of the cart 210 is channeled in area between the surface of the cart 210 as the cart 210 sits in the cart bay 205 and the interior housing of the cart bay 205 that is set apart (to make room for the cart 210 inside the cart bay 205) from the cart 210 when it is stowed.

Next, the airflow continues its circulation pattern to circulate around the other sides of the cart 210. The cooled air is sent across the surface area or face of the front side 270 (X'-Z', X'-Y') of the cart 210 in the cart bay (when the bay cart door (not shown) is closed) to the opposite side of the cart 210 while maintaining the spread 245 airflow pattern formed by the openings (224, 226) of the plates and also by virtue of having to conform with the spacing provided between the housing of the cart bay 205 and the cart 210.

The airflow continues on towards the left side 265 of the cart 210 in a reverse direction and is received (intake airflow) by a longitudinal rectangular opening 228 of the plate 225. The airflow is then tapered or funneled 250 to a circular shaped aperture or opening 222 in plate 220. The divider 223 prevents the airflow from mixing with the forwardly directed airflow and also directs the airflow towards the micro-chiller unit 230 via the tapered or funneled airflow path. The divider 223 is offset on the plate 220 to enable containment of a larger volume of air between plate 225 and 220 in the reverse direction as the airflow undergoes a tapering or funneling operation that can slow or retard the airflow throughput. The larger volume configured between plate 225 and 220 offsets or compensates (i.e., for pressure flow differences) for any slowing of the throughput of the airflow caused by reconfiguring of the airflow and funneling the airflow through the circular shaped opening 222 in plate 220 while maintaining the airflow throughput in the forward direction where it is not reconfigured and therefore does not experience the similar effects in the flow path. The offset divider 223 provides less volume or spacing in the area between 220 and 225 for transporting of the cooled air in the forward direction than in the reverse direction on the opposite side of the divider 223. In various embodiments, the airflow is bi-directionally configured to flow in both directions of the forward direction and the reverse direction to circulate about the interior of the cart bay 205.

The openings 224 and 226 are both configured towards the exterior (Y-Y' axis) outward portion of the plates (220, 225) to manage or direct the airflow around the cart 210. The length and the width of each plate matches the cart bay housing's length and width which is greater than the length and width of the cart 210 stored in the interior of the cart bay 205.

Similarly, the opening 228 of plate 225 on the opposite side of the opening 226 is likewise configured towards the plate 225 exterior (Z'-Y' axis) outward portion to receive the airflow on the left side 265 in the reverse direction from the cart 210 that has been circulated. Hence the airflow pattern that circulates around the sides of the cart is maintained uniformly by matching openings on either side of the plate 225. The airflow is reconfigured or changed after passing through the opening 228 of the plate 225. The plate 225 therefore serves to both keep the airflow pattern uniform and to protect the micro-chiller unit 230 in the plate assembly from impacts as it is set apart from the micro-chiller unit 230 by the plate 220 configured with the divider 223 on which the plate 225 is attached.

FIG. 2B illustrates a diagram with multiple micro-chiller units configured in a cart bay for cooling the cart in accordance with various embodiments. FIG. 2A shows a micro-chiller unit 230 and an additional micro-chiller unit 231 positioned in the rear of the cart bay. For the sake of simplicity, the plate assembly comprising multiple plates of FIG. 2A is not shown in FIG. 2B. In various embodiments, the additional micro-chiller unit 231 may be configured to enable in combination with the micro-chiller unit 230 radially expel air around the bottom side 280 (Z-Z', X-X') to the front side 270 to the top side 275 (Z-Z', X-X') of the cart 210 when stowed in the cart bay 205. The additional micro-chiller unit 231 can serve to augment cool airflow around the additional set of sides of the cart 210 and to circulate and re-circulate cool air around all the sides of the cart 210 when it is stored in the cart bay 205. In various embodiments, the cart bay 205 in FIG. 2B may be configured as a double-sided unit where the additional micro-chiller unit 231 may be mounted on the opposite side of the rear plate to separately channel air (i.e., channel air through additional top/lower openings in the rear plate) over surfaces of the bottom side 280, front side 270, and top side 275 of the cart 210. In various embodiments, both micro-chiller units may be configured as single sided unit for the channeling of airflow on all the sides (right side 260, left side 265, front side 270, top side 275, and bottom side 280) of the cart 210.

FIG. 2C illustrates another view of the micro-chiller unit 230 and micro-chiller unit 231 mounted on a rear plate of the plate assembly in accordance with various embodiments. FIG. 2C shows micro-chiller unit 230 spatially offset from micro-chiller unit 231 on a rear plate 215 of the plate assembly 255. In various embodiments, by virtue of the offset spacing from each other, each micro-chiller unit may channel or expel airflow on paths that are different to each other for optimized airflow around the cart.

FIG. 2D illustrates a side view of the plate assembly in the rear of the cart bay in accordance with various embodiments. In FIG. 2D, the plate assembly 255 is shown to take a minimum amount of space of the cart bay 205 that may or will still accommodate for legacy and current carts stowed in the cart bay 205. The plate assembly 255 consumes about half an inch (1.27 cm) of distance in the back of the cart 210 (i.e., the distance of about .5 inches (1.27 cm) is needed of an inlet to a blower of the micro-chiller unit in the back of the cart for proper air ingestion).

FIG. 2E illustrates a top view of the cart bay 205 in accordance with various embodiments. In FIG. 2E there is an internal wall 290 configured in the interior of the cart bay 205 that configured along the entire height from the base of the cart bay 205 (i.e., the floor of the aircraft or the monument in which the cart bay 205 sits) to its top or interior ceiling (and along most of its length except for a portion to vent the cooler air back into the interior of the cart bay 205) and creates an airflow passage (240-1, 240-2) to circulate cooler air from the micro-chiller unit 230 to a front of cart bay 205 to enable the cooler air to circulate back 245-1, 245-2 on either side of the cart bay 205 around the sides of the cart 210 stored in the cart bay 205 to be ingested by the micro-chiller unit 230 (via an inlet of the micro-chiller unit 230 at the rear of the cart bay 205).

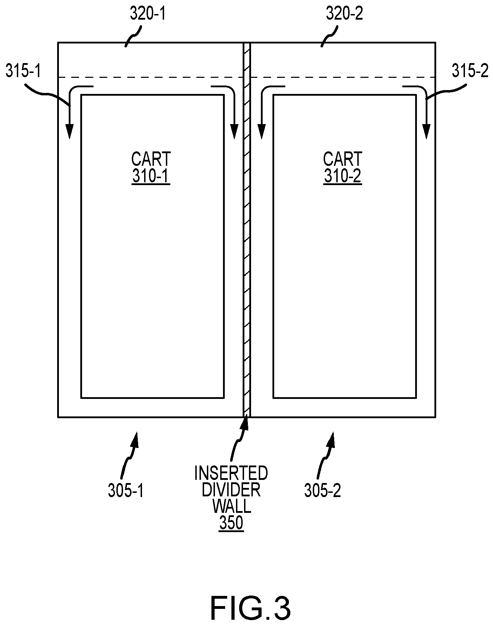

FIG. 3 illustrates a diagram of adjacent cart bays with a divider 350 to separate/isolate airflow 315-1, 315-2 between each cart bay in accordance with various embodiments. In FIG. 3, there is shown a first cart bay 305-1, and a second cart bay 305-2 that may be configured in sub-units of a bar, galley, or other compartment for storage of chilled refreshments. In various embodiments, a divider 350 is configured between each cart bay that enables circulation separately in each cart bay. The divider 350 may be a removable or an add-in type divider that can be configured in a legacy type of cart bay that is not divided. In various embodiments, the divider 350 is an insert composed materials that may have insulative properties to promote separate cool air circulation in each cart bay.

In various embodiments, cart bay 305-1 (and similarly cart bay 305-2) includes the components (320-1, 320-2) of a micro-chiller unit, an opening for each micro-chiller unit to ingest air, to channel airflow (315-1, 315-2) around the sides (of carts 310-1, 310-2 stored) the cart bays 305-1, 305-2 where the divider 350 acts as a barrier for the airflow between each cart bay. The cooled air's airflow is siloed or isolated by the divider 350 between bays that have not been previously divided and this enables each cart bay to be separately chilled.

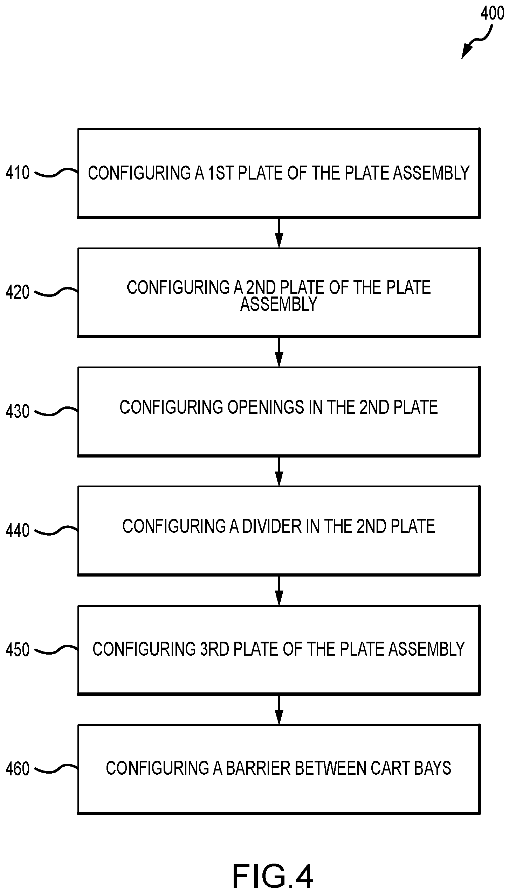

FIG. 4 is a flow diagram of for configuring a plate assembly in a cart bay in accordance with various embodiments. The method 400 for ease of description is described with forming of the plate assembly at the rear of the housing of the cart bay to direct the airflow from the micro-chiller unit around the sides of a cart stowed in the cart bay.

At step 410, a first plate is configured that forms the rear plate of the plate assembly with at least one micro-chiller unit mounted. In the case of mounting a single micro-chiller unit, the unit is positioned in a center location of the rear plate. In the case of mounting multiple micro-chiller units, each unit is positioned in an offset location from a centerline of the rear plate to cause different airflow paths of cooled air that is expelled from each unit. Further, with multiple offset positioned micro-chiller units mounted on the rear plate in either a single sided or doubled sided configuration, the cool air flow is increased in the interior housing of the cart bay so that a cart that is stowed in the cart bay can receive air flow on its right, left, front sides, and its top and bottom sides. In various embodiments, multiple micro-chiller units allow more diversity in the airflow channel across the various exterior surfaces of the cart, and the spacing in between the interior surface of the housing of the cart bay and the exterior surfaces of the cart when the cart is stowed in the cart bay.

At step 420, the plate assembly is configured to include a second plate that directs the cool air flow from the micro-chiller unit that is mounted on the rear plate. In this case, the second plate is used for air flow direction, and is configured at step 430 with a parallel lengthwise opening (vents, slits, apertures) on one side close to an exterior edge on a right side of the second plate that directs or expels cool air (outtake opening) in an airflow towards the outside side of the interior housing to circulate and to recirculate in a circular manner around edges of the internal space of the housing. The left side of the second plate is configured with a smaller and circular shaped aperture or opening to ingest cool air (an intake opening) that has already been circulated about the cart bay and around the surfaces of a cart stored in the cart bay. At step 440, the second plate is also configured with a divider that protrudes from the second plate to form two cavities or spacing of a first and second cavity or spacing between the second plate and a third plate that is fitted to or sandwiched to the second plate. The divider acts as a wall to a set of cavities that are formed on a right side of the second plate and on the left side of the second plate. Each cavity is formed with sides formed by the housing of the interior housing of the cart bay, a top of the third plate interior surface, and a bottom of the second plate exterior surface. The cavity to the right side that receives the forward air flow is smaller than the cavity on the left side that ingests the airflow that has already been circulated around the cart bay and/or cart.

In various embodiments, by configuring cavities of different volumes the throughput of the air flow expelled and ingested on both sides of the first plate in the forward and reverse directions as the cool air is circulated around the cart and cart bay is managed to account for the smaller aperture for the return flow.

At step 450, the third plate is configured with a pair of lengthwise opening for managing the air flow in the plate assembly is configured and forms the rear wall that the cart when stored in the cart bay is adjacent. In various embodiments, the second plate provides a clean surface at the back of the cart bay to accommodate cart stops and bumpers that rest against the cart or are impacted by the cart upon a stowing operation of the cart into the cart bay. The combination of the first and second plates also provides a protective assembly, interface, or configuration to the micro-chiller unit that is mount on the rear plate of the assembly. The second plate is configured with a set of parallel openings on either side to direct airflow for circulation and re-circulation uniformly (or to spread the airflow) across surfaces of the sides (right, front, left) of the cart in a circular airflow pattern.

In various embodiments, the airflow is expelled from a first parallel opening of the second plate in a forward direction towards the interior right side of the cart bay and then receives by a second parallel opening configured in the second plate (of a similar shape and size) of opposite reverse directed cool air towards the left interior side of the cart bay that has been circulated around the cart bay for direction back to the micro-chiller unit. In this way, both sets of parallel openings on either side manage the uniform air circulation about the interior of the cart bay and provide cool air across the cart side surfaces to cool the cart (and its interior compartments that may store food products).

In various embodiments, the cart assembly is configured to take a minimum space in the interior of the cart bay and to enable carts that are in use to be stowed in modified cart bays with the plate assembly and the micro-chiller unit installed. In various embodiments, the plates of the assembly are configured of rigid materials that include light weight steel and aluminum alloys, plastics, or corrugated (honeycomb) paper materials that can direct airflow and are a durable enough to withstand the likely daily impacts of the carts when stowed.

At step 460, a divider is configured in a multiple cart bays that are not divided, and the divider provides a barrier to isolate the airflow in each cart bay. In various embodiments, the divider is an insertable barrier that is not intrusive and does not impede the stowing operations of carts into the cart bay while keeping circulated cool air flow within each cart bay.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. An assembly comprising:
a cart bay (205);
a plate assembly (255) comprising a plurality of plates (215, 220, 225) that are configured at a rear part of the cart bay; and
a micro-chiller unit (230) that is disposed within the plate assembly that radially expels cooled air for circulation in the cart bay wherein the cooled air is directed by at least one plate of the plurality of plates of the plate assembly across an exterior surface of a galley cart (210) stowed in the cart bay.

2. The assembly of claim 1, wherein the cooled air is circulated by the at least one plate (215, 220, 225) of the plurality of plates (255) across a set of interior sides of the cart bay.

3. The assembly of claim 1 or 2, wherein the cooled air is circulated by the at least one plate (215, 220, 225) of the plate assembly (255) in a forward direction across the exterior surface of a first side of the galley cart (210) stowed in the cart bay and then in a reverse direction across the exterior surface of a second side that is opposite to the first side of the galley cart stowed in the cart bay.

4. The assembly of any preceding claim, wherein the cooled air is circulated by the at least one plate of the plate assembly in the forward direction across the exterior surface of a bottom side of the galley cart (210) stowed in the cart bay and then in the reverse direction across the exterior surface of a top side that is opposite to the bottom side of the galley cart stowed in the cart bay (205).

5. The assembly of any preceding claim, further comprising:
a spacing between interior surfaces of the cart bay and sides of the galley cart stowed in the cart bay to circulate the cooled air by the at least one plate of the plate assembly across a respective side surface of the galley cart.

6. The assembly of any preceding claim, wherein the at least one plate (215, 220, 225) of the plate assembly (255) is configured to protect the micro-chiller unit (230) from impact caused by motion of the galley cart stowed in the cart bay.

7. The assembly of any preceding claim, further comprising:
a plurality of micro-chiller units (230, 231) mounted on a rear plate (215) of the plate assembly (255) disposed of in the cart bay (205) to circulate the cooled air across at least one side of the galley cart (210) stowed in the cart bay wherein each micro-chiller unit is positioned to expel the cooled air in separate channels across at least one exterior surface of the galley cart stowed in the cart bay.

8. The assembly of any preceding claim, wherein the plate assembly (255) is configured to consume an amount space in the cart bay (205) to still enable a storage of the galley cart (210) of a size that is in use to be stowed in the cart bay; and/or
a divider (223) configured between an adjacent pair of cart bays that enables isolation of the cooled air that is circulated within each cart bay.

9. The assembly of any preceding claim,
wherein the micro-chiller unit (230) is mounted on the rear plate (215) of the plate assembly (255); and
wherein the at least one plate of the plate assembly is configured with an intake opening to ingest air circulated across the one or more exterior surfaces of the galley cart (210) for direction towards the micro-chiller unit, and an outtake opening to circulate air that has been radially expelled by the micro-chiller unit across the one or more exterior surfaces of the galley cart to cool the galley cart; optionally
wherein the intake opening and the outtake opening configured in the at least one plate of the plate assembly provides a back-and-forth operation to uniformly re-circulate the cooled air across the one or more exterior surfaces of the galley cart stowed in the cart bay; optionally wherein the plate assembly further comprises:
a first plate that is configured with the intake opening of a circular shape to taper airflow that has been circulated around the cart bay towards the micro-chiller unit, and the outtake opening of a rectangular-shape to spread airflow of the cooled air from the micro-chiller unit around the cart bay.

10. A system for directing airflow within a galley cart bay (205) comprising:
a plate assembly (255) disposed in the galley cart bay comprising a plurality of plates assembled together at a rear part of the galley cart bay; and
a micro-chiller unit (230) mounted to a plate of the plurality of plates of the plate assembly that sends cooled air from the rear of the galley cart bay through the plurality of plates wherein the plurality of plates comprises one or more plates that are assembled and configured to spread the airflow of the cooled air across outward portions of the galley cart bay to cool exterior surfaces of a galley cart that is stowed within the galley cart bay.

11. The system of claim 10, wherein the cooled air is bi-directionally circulated by the one or more plates around the galley cart bay.

12. The system of claim 11, wherein the cooled air is bi-directionally circulated via spacing that exists between the galley cart bay and a stowed galley cart in the galley cart bay.

13. The system of any of claims 10 to 12, wherein the plurality of plates provides a protective structure to the micro-chiller unit (230) against impacts caused when storing of the galley cart in the galley cart bay; and/or
wherein the plurality of plates (215, 220, 225) comprise at least one plate that is configured with a set of openings of a different size and shape for directing and receiving the airflow of the cooled air in the galley cart bay.

14. A method to manufacture of a plurality of plates in a galley cart bay comprising:
assembling the plurality of plates (215, 220, 225) to form a plate assembly (255) which is modeled to conform with a rear part of the galley cart bay; and
mounting a micro-chiller unit (230) to a rear plate of the plate assembly that generates a cool air flow that is patterned by openings configured in the plurality of plates of the plate assembly to circulate cool air around exterior portions of the galley cart bay wherein circulated cool air chills exterior surfaces of a galley cart stowed in the galley cart bay (205).

15. The method to manufacture of the plurality of plates in the galley cart bay of claim 14, wherein the plate assembly (225) accounts for about half an inch of distance within the galley cart bay (205) to enable an already in use galley cart for storing in the galley cart bay; and optionally
wherein the plurality of plates is composed of a set of material comprising at least a lightweight metal alloy, a fiberglass material, a phenolic honeycomb material, and a plastic material.
